# EUROPÄISCHE PATENTSCHRIFT

(11) **EP 2 105 233 B1**
(45) Veröffentlichungstag und Bekanntmachung des Hinweises auf die Patenterteilung: **18.07.2018**
(21) Anmeldenummer: 09003716.9
(22) Anmeldetag: 14.03.2009
(51) Int. Cl.: B23D 49/16, B27B 9/04

(54) **Hand-Werkzeugmaschine mit Befestigungseinrichtung**
Hand machine tool with attachment device
Machine-outil manuelle dotée d'un dispositif de fixation

(30) Priorität: 25.03.2008 DE 102008015478
(43) Veröffentlichungstag der Anmeldung: 30.09.2009
(73) Patentinhaber: Festool GmbH, 73240 Wendlingen am Neckar (DE)
(72) Erfinder: Reuss, Torsten, 73265 Dettingen unter Teck (DE); Seifert, André, 99084 Erfurt (DE)
(74) Vertreter: Patentanwälte Bregenzer und Reule Partnerschaftsgesellschaft mbB

(56) Entgegenhaltungen:
- EP-A2- 1 325 790
- EP-A2- 2 105 231
- WO-A1-02/057042
- US-A1- 2002 059 732
- US-A1- 2004 168 561
- US-A1- 2007 000 368
- US-B2- 7 296 356

## Beschreibung

Die Erfindung betrifft eine Hand-Werkzeugmaschine, insbesondere eine maschinelle Hand-Säge oder einen maschinellen Hobel, gemäß dem Oberbegriff des Anspruchs 1.

Eine derartige Hand-Werkzeugmaschine ist in WO 02/057042 A1 beschrieben.

Zur Befestigung von Sägetischen an Hand-Werkzeugmaschinen, beispielsweise Kreis-Sägen, Hubsägen, insbesondere Stichsägen und dergleichen, sind üblicherweise Schrauben vorgesehen. Die Werkstücktische bleiben an der Maschine und werden allenfalls bei Verschleiß gewechselt. Eine Positionsänderung des Werkstück-Tisches, beispielsweise zur Winkelverstellung, ist schwierig, da in der Regel mit Hilfe eines Schraubendrehers oder eines sonstigen Werkzeuges eine oder mehrere Befestigungsschrauben des Werkstück-Tischs gelöst und anschließend wieder angezogen werden müssen.

Es ist daher die Aufgabe der vorliegenden Erfindung, eine komfortable, einfach lösbare und wieder schließbare Befestigungseinrichtung für einen Werkstück-Tisch einer Hand-Werkzeugmaschine bereitzustellen.

Zur Lösung der Aufgabe ist eine Hand-Werkzeugmaschine gemäß der technischen Lehre des Anspruchs 1 vorgesehen.

Die erfindungsgemäße Hand-Werkzeugmaschine ist zweckmäßigerweise eine maschinelle Hand-Säge, z.B. Kreissäge oder eine Hubsäge, insbesondere eine Stichsäge, ein maschineller Hobel oder dergleichen.

Die Erfindung ermöglicht es, einen Werkstück-Tisch schnell auszuwechseln. So kann beispielsweise ein Werkstück-Tisch mit einer feststehenden Führungsfläche gegen einen Werkstück-Tisch mit verstellbaren Führungsflächen getauscht werden, ohne dass dazu ein Werkzeug nötig ist.

Der Haltebacken ermöglicht eine sichere und einfache Befestigung des Werkstück-Tischs an der Hand-Werkzeugmaschine.

Ein Lager für den Haltebacken ist beispielsweise ein Schiebelager, ein Schwenklager oder ein Schiebe-Schwenk-Lager. Das Widerlager ist vorzugsweise durch einen Haltevorsprung oder eine Halteaufnahme gebildet. Aber auch eine sonstige Anlagefläche, gegen den der Haltebacken durch das jeweils von ihm gehaltene Teil wirksam sein kann, kann als Widerlager dienen. Es können mehrere Widerlager vorgesehen sein.

Die Befestigungseinrichtung ist zweckmäßigerweise werkzeuglos betätigbar. Dazu ist vorzugsweise ein Hand-Bedienelement zur manuellen Betätigung des Haltebackens oder der Haltebacken vorgesehen. Das Hand-Bedienelement ist in einer bevorzugten Ausführungsform ein Betätigungshebel. Aber auch ein Betätigungsknauf, ein Handrad oder dergleichen können als Hand-Bedienelement dienen.

Das jeweilige Bedienelement kann mittelbar oder unmittelbar auf den Haltebacken wirken oder auch einen Körper, der den Haltebacken enthält oder an dem der Haltebacken angeordnet ist, betätigen. Vorzugsweise ist jedoch ein Betätigungsgetriebe zum Betätigen des jeweiligen Haltebackens oder der Haltebacken vorgesehen. Das Betätigungsgetriebe kann beispielsweise ein Übersetzungsverhältnis haben, das eine Übersetzung im Sinne einer Kraftverstärkung in Richtung der Haltestellung bewirkt. Das Betätigungsgetriebe kann auch eine freiere Positionierung des Bedienelements ermöglichen.

Das Betätigungsgetriebe kann beispielsweise ein Zahnradgetriebe, ein Seilzuggetriebe, ein Keilgetriebe oder dergleichen umfassen. Bevorzugt ist ein Kurvengetriebe, das eine Steuerkurve umfasst, die auf eine mit dem mindestens einen Haltebacken gekoppelte oder an dem mindestens einen Haltebakken angeordnete Betätigungsfläche wirkt.

Die Steuerkurve ist beispielsweise am Hand-Bedienelement, an einem mit diesem gekoppelten Kurvenkörper oder einen sonstigen Getriebeteil, z.B. einen Zahnrad-Bauteil, angeordnet. Es ist bevorzugt, dass die Steuerkurve um eine Schwenkachse des Betätigungshebels verläuft.

Zwischen der Steuerkurve und der Betätigungsfläche wird zweckmäßigerweise ein federnder Kontakt gehalten, wofür Federmittel vorgesehen sind. Beispielsweise können die Betätigungsfläche und/oder die Steuerkurve federnd sein bzw. durch eine Feder oder einen Federkörper gebildet sein. Es ist aber auch möglich, dass eine Federanordnung auf die Betätigungsfläche und/oder die Steuerkurve wirkt. Beispielsweise sind die Betätigungsfläche oder ein Körper mit der Betätigungsfläche und/oder die Steuerkurve bzw. ein Körper, der die Steuerkurve enthält, federnd gelagert oder durch eine Kraft beaufschlagt.

Die Steuerkurve oder die Betätigungsfläche haben zweckmäßigerweise einen zwischen der Freigabestellung und der Verriegelungsstellung wirksamen Totpunkt zum Halten der Befestigungseinrichtung in der Freigabestellung und/oder der Haltestellung. Vorzugsweise ist der Totpunkt in der Nähe der Haltestellung oder Verriegelungsstellung angeordnet, so dass die Befestigungseinrichtung in der Haltestellung bleibt. Aber auch bezüglich der Freigabestellung ist es vorteilhaft, wenn ein Totpunkt in der Nähe des zugeordneten Abschnitts an der Steuerkurve oder der Betätigungsfläche vorgesehen ist.

Anstelle und/oder in Ergänzung zu dem Totpunkt oder einem Kipppunkt an der Steuerkurve oder der Betätigungsfläche ist es vorteilhaft, wenn Rastmittel zum Verrasten des Haltebakkens in der Haltestellung vorgesehen sind. Die Rastmittel wirken beispielsweise direkt auf den Haltebacken. Es ist aber auch möglich, dass die Rastmittel beispielsweise auf das manuelle Bedienelement, z.B. den Bedienhebel, auf ein Getriebeteil, das mit dem Haltebacken gekoppelt ist, auf ein Kurvenelement, einen Kurvenkörper oder dergleichen wirken.

Die Befestigungseinrichtung kann am Werkstück-Tisch oder am Gehäuse vorgesehen sein. Bei der gehäuseseitigen Anordnung sind das Widerlager und der mindestens eine Haltebacken an dem Gehäuse angeordnet. Dort befindet sich dann auch das Lager für den Haltebacken. Prinzipiell wäre es aber auch möglich, am Werkstück-Tisch ein festes oder bewegliches Widerlager und den zugeordneten beweglichen Haltebacken anzuordnen.

Das Widerlager ist zweckmäßigerweise bezüglich des Gehäuses oder des Werkstück-Tischs ortsfest feststehend, d.h. nur der mindestens eine Haltebacken ist beweglich gelagert. Prinzipiell möglich ist es aber auch, dass das Widerlager einen relativ zu dem mindestens einen Haltebacken beweglich gelagerten Widerlagerkörper, z.B. einen Widerlager-Haltebacken, umfasst.

Das Widerlager und der Haltebacken sind zweckmäßigerweise hakenförmig oder klauenförmig. Bei dieser Ausgestaltung können die Hakenvorsprünge oder Klauenvorsprünge beispielsweise in entsprechende Ausnehmungen am Befestigungsabschnitt eingreifen. Ferner ist es auch möglich, dass die Klauen oder Haken beispielsweise den Befestigungsabschnitt untergreifen, sich mit diesem verhaken oder dergleichen.

Alternativ ist es aber auch denkbar, dass der Haltebacken als eine Art Spannbacken ausgestaltet ist. Es ist z.B. möglich, dass der mindestens eine Haltebacken nicht haken- oder klauenförmig ist, sondern eine Spann-Planfläche aufweist.

Eine am Gehäuse angeordnete Stützfläche und eine Anlagefläche des Werkstück-Tischs sind zweckmäßigerweise in montiertem Zustand des Werkstück-Tischs zwischen dem Widerlager und dem mindestens einen Haltebacken angeordnet. Es versteht sich, dass auch eine Anordnung möglich ist, bei der der Haltebacken und das Widerlager zwischen Abschnitten der Anlagefläche und/oder der Stützfläche angeordnet sind.

Die Befestigungseinrichtung bildet erfindungsgemäß eine Spanneinrichtung zum Spannen einer an dem Befestigungsabschnitt angeordneten Anlagefläche gegen eine am Gehäuse angeordnete Stützfläche oder umfasst eine solche Spanneinrichtung. Das Verspannen kann mit einer von dem Haltebacken separaten Einrichtung erfolgen, z.B. einem Spannkörper, einer Feder oder dergleichen. Zweckmäßigerweise ist jedoch der mindestens eine Haltebacken ein Bestandteil der Spanneinrichtung.

Erfindungsgemäß ist ferner vorgesehen, dass die Spanneinrichtung mindestens eine beim Bewegen des Haltebackens zwischen der Freigabe- und der Haltestellung in der Art eines Keilgetriebes wirksamen Schrägfläche aufweist, mit der die Anlagefläche gegen die Stützfläche gespannt wird. Der Haltebacken kann z.B. bei dieser Bewegung eine relative Verlagerung des Werkstück-Tischs in Richtung bezüglich des Gehäuses ortsfesten Widerlagers im Sinne eines Verspannens des Werkstück-Tischs an dem Gehäuse bewirken.

Die vorgenannte Schrägfläche ist beispielsweise am Widerlager oder am Haltebacken vorgesehen. Es ist aber auch möglich, dass beispielsweise die Anlagefläche und/oder die Stützfläche einen Schrägverlauf aufweisen und somit Spann-Schrägflächen bilden. Bevorzugt ist jedoch, wenn die Anlagefläche und/oder die Stützfläche im Wesentlichen parallel zu der Führungsfläche verlaufen. Ferner ist es vorteilhaft, wenn am Befestigungsabschnitt des Werkstück-Tischs eine Spann-Schrägfläche vorhanden ist, die mit der korrespondierenden, optional ebenfalls schrägen Spannfläche des Haltebackens oder des Widerlagers zusammenwirkt.

Zur Festlegung einer jeweiligen Winkelstellung des Werkstück-Tischs bezüglich des Gehäuses oder als zusätzliche Winkellage-Sicherung ist es vorteilhaft, wenn der Befestigungsabschnitt des Werkstück-Tisch und die Befestigungseinrichtung,
beispielsweise der Haltebacken oder das vorgenannte Widerlager, Winkelanschlagflächen aufweisen.

Nachfolgend werden Ausführungsbeispiele der Erfindung anhand der Zeichnung erläutert. Es zeigen:

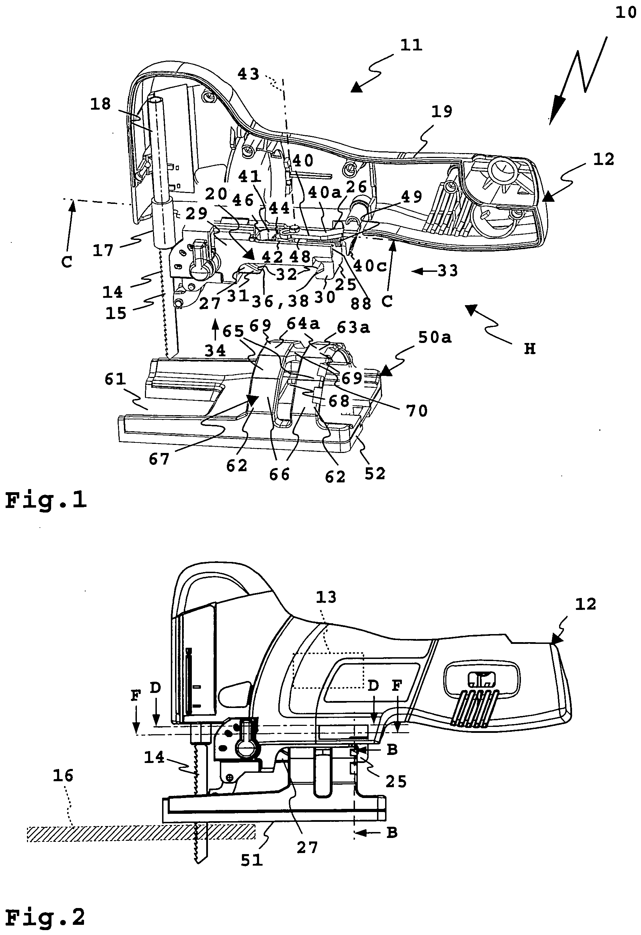

- Figur 1: eine Ansicht einer erfindungsgemäßen Hand-Werkzeugmaschine mit geöffnetem Gehäuse sowie eines Werkstück-Tischs in voneinander getrenntem Zustand perspektivisch schräg von hinten oben,
- Figur 2: die Hand-Werkzeugmaschine gemäß Figur 1 in einer Seitenansicht mit befestigtem Werkstück-Tisch,

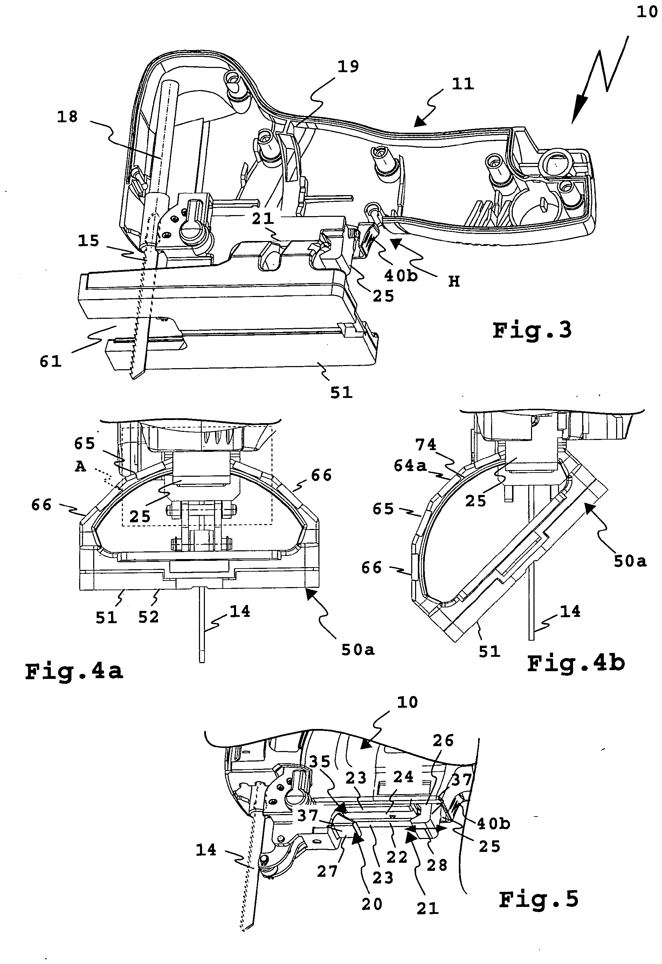

- Figur 3: die Hand-Werkzeugmaschine gemäß Figur 2 schräg von unten,
- Figur 4a: eine hintere Ansicht eines unteren Teils der Hand-Werkzeugmaschine gemäß Figur 2 mit dem Werkstück-Tisch in einer ersten Winkelstellung,
- Figur 4b: eine Ansicht entsprechend Figur 4a, wobei der Werkstück-Tisch in einer zweiten Winkelstellung ist,
- Figur 5: die Hand-Werkzeugmaschine gemäß Figur 3, jedoch mit entferntem Werkstück-Tisch,

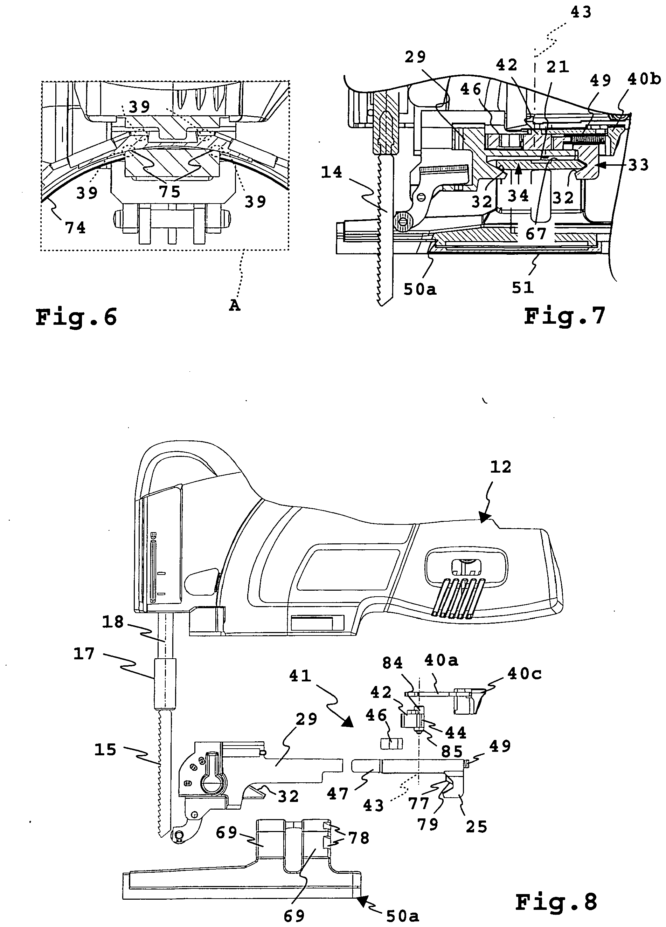

- Figur 6: eine Schnittansicht entsprechend einem Ausschnitt A in Figur 4a etwa entlang einer Schnittlinie B-B in Figur 2,
- Figur 7: eine Teil-Schnittansicht etwa entsprechend einer Linie C-C in Figur 1,
- Figur 8: eine Explosionsdarstellung der Hand-Werkzeugmaschine gemäß Figur 1,

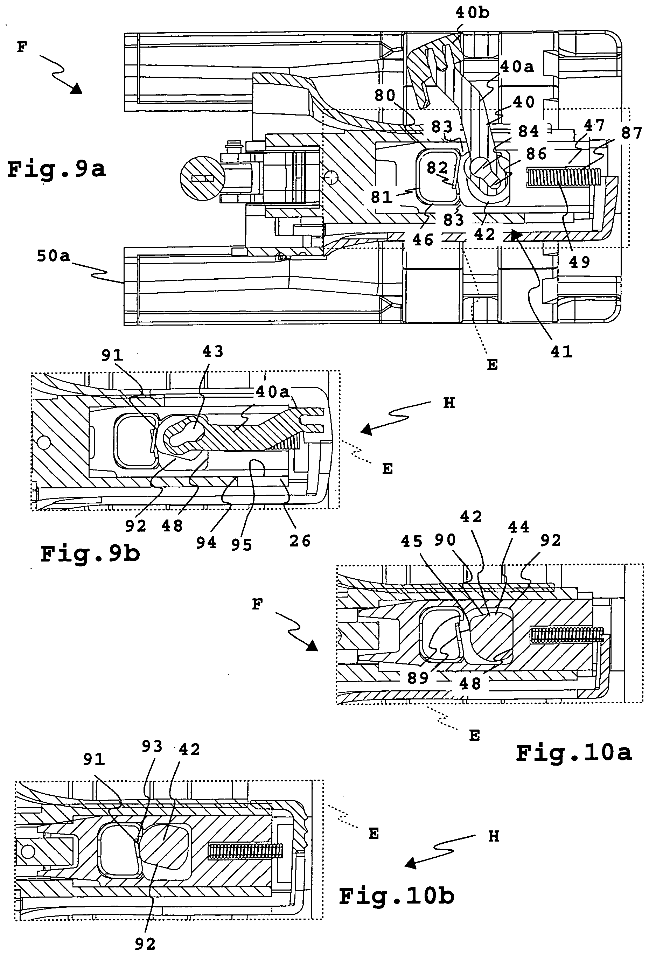

- Figur 9a: eine Schnittansicht einer Befestigungsabschnitt der Hand-Werkzeugmaschine gemäß Figur 2 entsprechend einer Linie D-D in Figur 2, wobei ein Betätigungshebel in Freigabestellung der Befestigungseinrichtung steht,
- Figur 9b: einen Ausschnitt E aus Figur 9a, wobei der Betätigungshebel in Schließ- oder Befestigungsstellung ist,
- Fig. 10a,b: Schnittdarstellungen der Befestigungseinrichtung gemäß Figuren 9a, 9b entsprechend dem Ausschnitt E in Freigabe- und Haltestellung etwa entsprechend einer Schnittlinie F-F in Figur 2, und

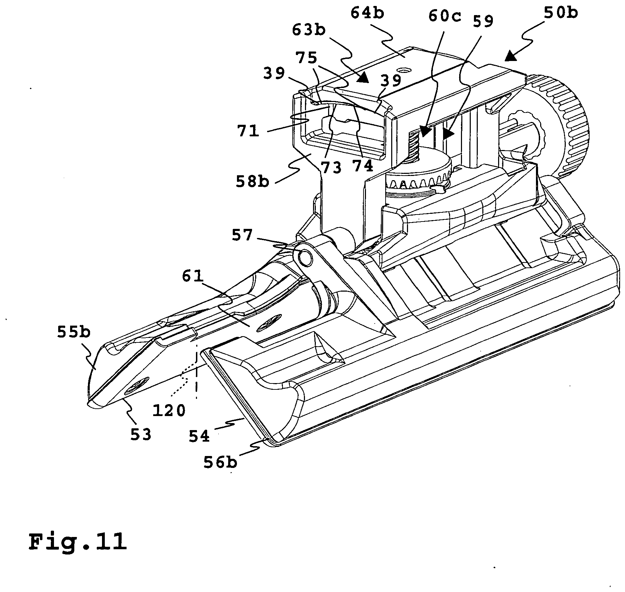

- Figur 11: einen an der Werkzeugmaschine gemäß Figur 1 befestigbaren Werkstück-Tisch mit schwenkbaren Werkstück-Tischteilen.

Eine Hand-Werkzeugmaschine 10, z.B. eine Hand-Säge 11, weist einen in einem Gehäuse 12 angeordneten elektrischen Antriebsmotor 13 zum Antreiben eines Werkzeugs 14 auf. Die Hand-Säge 11 ist beispielsweise eine Stichsäge, das Werkzeug 14 ein Säge-Werkzeugs 15, z.B. ein Sägeblatt. Mit der Hand-Werkzeugmaschine 10 können Werkstücke 16 bearbeitet, nämlich gesägt werden.

Das Gehäuse 12 weist Gehäuseschalen 19 auf, die beispielsweise mittels Schrauben miteinander verbunden sind.

Die Hand-Werkzeugmaschine 10 ermöglicht winkelige Schnitte in unterschiedlichen Winkellagen bezüglich des Werkstückes 16, wobei eine präzise Führung der Hand-Werkzeugmaschine 10 in den jeweiligen Winkellagen durch wahlweise an der Hand-Werkzeugmaschine 10 befestigbare Werkstück-Tische 50a, 50b und 50c erleichtert ist. Die Werkstück-Tische 50a, 50b können werkzeuglos mit einer am Gehäuse 12 angeordneten Befestigungseinrichtung 20 montiert werden.

Der Werkstück-Tisch 50a ist zur Führung an planen Werkstück-Oberflächen vorgesehen und kann neben der im Normalbetrieb üblichen Mittellage, bei der das Säge-Werkzeug 15 im Wesentlichen senkrecht vor eine Führungsfläche 51 an der Unterseite einer Führungsplatte 52 vorsteht, auch in Winkelstellungen oder Schrägstellungen bezüglich des Säge-Werkzeugs 15 verstellt und mit der Befestigungseinrichtung 20 befestigt werden, bei denen das Säge-Werkzeug 15 schräg, beispielsweise in Winkellagen von 22,5° und 45°, vor die Führungsfläche 51 vorsteht.

Der Werkstück-Tisch 50b hingegen sind zur Bearbeitung beispielsweise runder oder polygonaler Werkstück-Oberflächen vorgesehen, an die eine erste Führungsfläche 53 an einem Werkstück-Tischteil 55b und eine zweite Führungsfläche 54 eines zweiten Werkstück-Tischteils 56b angelegt werden können. In einer Mittellage der Werkstück-Tischteile 55b, 56b fluchten die beiden Führungsflächen 53, 54 miteinander, so dass sie insgesamt eine Führungsfläche 51 bilden.

Die Werkstück-Tischteil 55b, 56b sind mittels eines Schwenklagers 57 schwenkbeweglich an einer Werkstück-Tischbasis 58b gelagert.

Zum Halten der Werkstück-Tischteile 55b, 56b sind Haltemittel 59 vorgesehen. Die Haltemittel 59 umfassen ein selbsthemmendes Verstellgetriebe 60b, mit dem die Werkstück-Tischteile 55b, 56b in verschiedene Winkelstellungen zueinander verstellt werden können.

Ein unterer Abschnitt des von einer Werkzeug-Aufnahme 17 am unteren Ende einer durch den Antriebsmotor 13 antreibbaren Hubstange 18 angeordneten Säge-Werkzeugs 15 steht durch eine Durchtrittsöffnung 61 der Führungsplatte 52 bzw. der Werkstück-Tischteile 55b, 56b nach unten vor die Führungsflächen 51, 53 und 54 vor.

An der Oberseite der Führungsplatte 52 des Werkstück-Tischs 50a sind zwei bogenförmige, zueinander parallel verlaufende Befestigungshalter 62 angeordnet. Die Befestigungshalter 62 umfassen oder bilden Befestigungsabschnitte 63a zur Befestigung an der Befestigungseinrichtung 20.

Der obere Abschnitt der Werkstück-Tischbasis 58b bildet einen Befestigungsabschnitt 63b zur Befestigung an der Befestigungseinrichtung 20.

Die Befestigungseinrichtung 20 ist in einem Stützbereich 21 an der Unterseite des Gehäuses 12 angeordnet. Am Stützbereich 21 ist eine Stützfläche 22 vorgesehen, die als eine Planfläche ausgestaltet ist. Die Stützfläche 22 ist in zwei Stützflächenabschnitte 23 gegliedert, zwischen denen ein Zwischenraum 24 vorhanden ist. Die Stützflächenabschnitte 23 fluchten zur Bildung der Stützfläche 22 miteinander.

Korrespondierend mit der planen Stützfläche 22 sind Anlageflächen 64a, 64b der Befestigungsabschnitte 63a, 63b ebenfalls als Planflächen ausgestaltet.

Die Anlagefläche 64a bildet eine mittlere Anlagefläche einer Anlageflächenanordnung oder eines an der Oberseite der Befestigungshalter 62 angeordneten Anlagebereichs 67, der weitere, zu der eine mittlere Anlagefläche bildenden Anlagefläche 64a winkelige Anlageflächen 65 und 66 umfasst. Die Anlageflächen 65 und 66 sind in einer Winkelstellung von 22,5° und 45° zu der mittleren Anlagefläche 64 winkelig. Der Anlagebereich 67 ist symmetrisch, so dass auf beiden Seiten der mittleren Anlagefläche 64 jeweils eine zu dieser winkelige Anlagefläche 65 und 66 vorhanden ist.

Zwischen den beiden Befestigungshaltern 62 ist ein Zwischenraum 68 vorhanden, der somit jede der Anlageflächen 64a, 65 und 66 in zwei mit dem Zwischenraum 68 zueinander beabstandete Anlageflächenabschnitte 69 gliedert. Außer einem die beiden Befestigungshalter 62 verbindenden, im Bereich der mittleren Anlagefläche 64a angeordneten Verbinder 70 befindet verbindet sich kein Bauteil zwischen den beiden Befestigungshaltern 62. Aber auch der Verbinder 70 ist hinter die Anlageflächenabschnitt 69 zurückversetzt, so dass nur die Anlageflächenabschnitte 69 mit dem Stützbereich 21 in Kontakt treten.

Somit sind sowohl die Stützflächenabschnitte 23 als auch die Anlageflächenabschnitte 69 zueinander beabstandet, so dass die Kontaktflächen zwischen dem Stützbereich 21 und dem Anlagebereich 67 einen Abstand zueinander aufweisen und eine kippstabile Kontaktlage im Anlagebereich 67 realisiert ist.

Ein Haltebacken 25 der Befestigungseinrichtung 20 ist an einem Schiebelager 26 zu einem Widerlager 27 hin und von diesem weg schiebebeweglich gelagert, was durch einen Pfeil 28 angedeutet ist. Zwischen dem Widerlager 27 und dem Haltebacken 25 befindet sich der Stützbereich 21.

Das Schiebelager 26 sowie der Stützbereich 21 sind an einem Stützkörper 29 an der Unterseite des Gehäuses 12 vorgesehen. Der Stützkörper 29 ist beispielweise ein Bestandteil eines Getriebegehäuses für ein Getriebe, über das der Antriebsmotor 13 die Hubstange 18 linear auf und ab antreibt. Der Stützkörper 29 und die Befestigungsabschnitte 63a, 63b bestehen vorzugsweise aus Metall, z.B. Aluminium oder dergleichen, was eine hohe Maßgenauigkeit ermöglicht.

Das Widerlager 27 und der Haltebacken 25 sind hakenförmig, vorzugsweise klauenförmig ausgestaltet. Ein Haltebacken-Vorsprung 30 des Haltebackens 25 sowie ein Widerlager-Vorsprung 31 des Widerlagers 27 stehen in Richtung des Stützbereichs 21 vor., Die Vorsprünge 30, 31 untergreifen von einander entgegengesetzten Seiten die beiden Befestigungshalter 62 unterhalb der Anlageflächen 64a, 65 oder 66 des Werkstück-Tischs 50a oder greifen in Halteaufnahmen 71 an dem Befestigungsabschnitt 63b des Werkstück-Tischs 50b ein.

Die Vorsprünge 30, 31 sind zu ihren freien Enden hin von dem Stützbereich 21 weg schräg geneigt. Innenseiten der Vorsprünge 30, 31 bilden somit Schrägflächen 32, die beim Bewegen des Haltebackens 25 in Richtung des Widerlagers 27 in der Art eines Keilgetriebes wirksam sind. Die Befestigungsabschnitte 63a, 63b werden dabei vom Haltebacken 25 in Richtung des Widerlagers 27 verlagert, wobei Schrägflächen 72 an den Befestigungshaltern 62 oder Schrägflächen 73 an den Halteaufnahmen 71 an den Schrägflächen 32 entlang gleiten. Die Neigung der Schrägflächen 72, 73 korrespondiert mit der Neigung der Schrägflächen 32, d.h. die jeweiligen freien Endbereiche der Schrägflächen 72, 73 sind in Richtung des Anlagebereichs 67 bzw. der Anlagefläche 64b geneigt, so dass beim Verlagern des Haltebackens 25 in Richtung des Widerlagers 27 die Schrägflächen 32 an den Schrägflächen 72 oder 73 entlang gleiten und eine Schließkraft 33, die in Richtung des Widerlagers 27 wirksam ist, in eine den Anlagebereich 67 des Werkstück-Tisch 50a oder die Anlagefläche 64b des Werkstück-Tischs 50b gegen den Stützbereich 21 spannende Anpresskraft 34 umgelenkt wird. Die Befestigungseinrichtung 20 bildet eine Spanneinrichtung 35.

Auch bezüglich Spannflächen 74, die durch die Schrägflächen 32 bzw. 72 und 73 gebildet sind, ist das punktuelle Anpresskonzept, das durch die Unterteilung in voneinander beabstandete Stützflächenabschnitte 23 und Anlageflächenabschnitte 69 realisiert ist, konsequent weiterverfolgt. Die Schrägflächen 72 sind durch Fasen gebildet, die an den unteren, der Führungsplatte 52 zugewandten äußeren Randbereichen der beiden Befestigungshalter 62 ausgebildet sind. Somit verlaufen die beiden Schrägflächen 72 jeweils kreisförmig. Auch die Schrägfläche 73 an den Halteaufnahmen 71 hat einen bogenförmigen Verlauf. Somit haben die Spannkörper 37 der Befestigungseinrichtung 20 bildenden Vorsprünge 30 und 31 mit ihren seitlichen Randbereichen 38 Kontakt mit den Schrägflächen 72, 73, während zwischen den Randbereichen 38 liegende mittlere Abschnitte der Vorsprünge 30, 31 von den bogenförmigen Schrägflächen 72, 73 kontaktfrei beabstandet sind.

Die Randbereiche 38 sind zweckmäßigerweise korrespondierend mit bogenförmigem Verlauf der Schrägflächen 72 schräg geneigt, so dass die Randbereiche 38 zu den mittleren Abschnitten der Vorsprünge 30, 31 ansteigend schräg verlaufen.

Die Schrägflächen 72, 73 bilden Spannflächen 74. Die Spann-Vorsprünge bildenden Vorsprünge 30, 31 der Spanneinrichtung 35 wirken mit ihren Kontaktflächen 36 bereitstellenden Randbereichen 38 auf zueinander beabstandete Spannflächenabschnitte 75, die jeweils Randbereichen der Anlageflächen 64a, 65, 66 des Werkstück-Tischs 50a oder der Anlagefläche 64b des Werkstück-Tischs 50b gegenüberliegen. Somit ist ein weiter Abstand zwischen Kontaktbereichen 39 der Spanneinrichtung 35 und dem Stützbereich 21 einerseits und den Befestigungsabschnitten 63a, 63b andererseits realisiert.

Die Befestigungseinrichtung 20 ist mit einem Hand-Bedienelement 40 manuell bedienbar, das auf ein Betätigungsgetriebe 41 wirkt. Ein Betätigungshebel 40a dient als Hand-Bedienelement 40. Der Betätigungshebel 40a ist mit einem Kurvenkörper 42 gekoppelt, der am Stützkörper 29, z.B. dem Getriebegehäuse, um eine Schwenkachse 43 schwenkbar gelagert ist. In einer Freigabestellung F steht der Betätigungshebel 40a vom Gehäuse 12 ab, in einer Haltestellung H, bei der der Betätigungshebel 40a den Haltebacken 25 zum Widerlager 27 hin bewegt, fluchtet ein Handstück 40b mit einer Außenkontur des Gehäuses 12.

An dem Handstück 40b können Rastmittel, beispielsweise Rastvorsprünge oder Rastausnehmungen, vorgesehen sein, die den Betätigungshebel 40a in der Haltestellung H verrasten.

Eine Umfangsfläche des Kurvenkörpers 42, die um die Schwenkachse 43 herum verläuft, bildet eine Steuerkurve 44, die auf eine mit dem Haltebacken 25 gekoppelte Betätigungsfläche 45 wirkt. Die Betätigungsfläche 45 ist an einer Außenumfangsfläche eines Federglieds 46 vorgesehen, das auf einen in dem Schiebelager 26 aufgenommenen Schlittenkörper 47 wirkt, an dem der Haltebacken 25 angeordnet ist und nach unten an einer Ausnehmung 88 des Stützkörpers 29 aus dem Gehäuse 12 vorsteht. Die Steuerkurve 44 verläuft exzentrisch um die Schwenkachse 43, so dass der Kurvenkörper 42 in der Haltestellung H mit verhältnismäßig großer Kraft auf den Schlittenkörper 47 und somit den Haltebacken 25 wirkt. Das Federglied 46 schafft einen gewissen federnden Ausgleich, so dass die Befestigungseinrichtung 20 mit verhältnismäßig großer Spannkraft, allerdings doch vorhandener Feder-Elastizität in ihrer Haltestellung H bleibt.

In der Freigabestellung F wirkt ein anderer Abschnitt der Steuerkurve 44 auf eine der Betätigungsfläche 45 gegenüberliegende Betätigungsfläche 48, die durch eine Feder 49 an die Steuerkurve 44 gespannt ist. Durch die wie das Federglied 46 ein Federmittel bildende Feder 49 ist auch in der Freigabestellung F eine federnde Elastizität beim Betätigungsgetriebe 41 vorhanden.

Der Kurvenkörper 42 und das Federglied 46 sind in einer Ausnehmung 80 des Schlittenkörpers 47 aufgenommen. Das Federglied 46 hat eine im Wesentlichen rechteckförmige Querschnittskontur und stützt sich mit einer geschlossenen Seite 81 an einer Innenwandung der Ausnehmung 80 ab, während eine der Seite 81 gegenüberliegende Seite 82 durch die Steuerkurve 44 beaufschlagt wird. An Innenwänden der Ausnehmung 80 sind Haltevorsprünge 83 angeordnet, die zum Federglied 46 vorstehen und dieses dann in Position halten. An der Seite 82 des Federglieds 46 sind freie Enden 89 des Federglieds 46 angeordnet, die bei einem partiellen Eindringen der Steuerkurve 44 federnd zurückweichen.

Korrespondierend mit der Schwenkachse 43 stehen vor den Kurvenkörper 42 Achsvorsprünge 84 und 85 vor, die in nicht dargestellten Lageraufnahmen aufgenommen sind, so dass der Kurvenkörper 42 schwenkbar oder drehbar gelagert ist. Am oberen Achsvorsprung 84 ist zudem noch eine Drehmitnahme 86 vorgesehen, die in eine korrespondierende Ausnehmung am getriebeseitigen Ende des Betätigungshebels 40a eingreift, so dass dieser formschlüssig mit dem Kurvenkörper 42 verbunden ist.

Die Feder 46 ist einerseits am Stützkörper 29 und andererseits am Schlittenkörper 47 abgestützt. Die Feder 49 befindet sich in einer Ausnehmung 87, deren Innenkontur mit der Außenkontur der Feder 49 korrespondiert. Mithin ist die Ausnehmung 87 eine Art Tasche für die Feder 49, die vorliegend eine Schraubenfeder ist.

Die Steuerkurve 44 umfasst einen Exzenterabschnitt 90, der in der Haltestellung H auf die Betätigungsfläche 45 wirkt. Zwischen dem Exzenterabschnitt 90 und einem auf die Freigabe-Betätigungsfläche 48 in der Freigabestellung F wirkenden Freigabeabschnitt 91 ist ein Kipppunkt oder Totpunkt 92 vorgesehen, der den Kurvenkörper 42 in der Freigabestellung F hält. Der Freigabeabschnitt 91 und die zugeordnete Betätigungsfläche 48 sind Planflächen. Der Exzenterabschnitt 90 hingegen hat eine Kurvenform, die vorzugsweise mit einer durch die freien Enden 89 des Federglieds 46 gebildete Einbuchtung 93 der Betätigungsfläche 45 korrespondiert, so dass der Kurvenkörper 42 in der Haltestellung H gehalten wird.

Parallel zur Verschieberichtung (Pfeil 28) verlaufende Außenflächen 94 des Schlittenkörpers 47 sind gleitverschieblich an Innenflächen 95 des Schiebelagers 26 gelagert.

Der Haltebacken 25 hat eine im Wesentlichen V-förmige Innenseite 76, wobei ein v-Schenkel die Schrägfläche 32 bereitstellt. Am gegenüberliegenden V-Schenkel ist ein Winkelanschlagvorsprung 77 vorgesehen, der in der Haltestellung H in Winkelanschlagausnehmungen 78 an der Oberseite des zugeordneten Befestigungshalters 62 eingreift. Seitenflächen des Winkelanschlagvorsprungs 77 und der Winkelanschlagausnehmung 78 bilden Winkelanschlagflächen, die eine Winkelverstellung des Werkstück-Tischs 50a im verriegelten Zustand der Befestigungseinrichtung 20 verhindern. Beim Ausführungsbeispiel liegen die Winkelanschlagflächen 79 jedoch nicht aneinander an, sondern bilden eine optionale Winkeleinstellhilfe oder Winkelsicherung.

## Patentansprüche

1. Hand-Werkzeugmaschine, insbesondere maschinelle Hand-Säge (11) oder maschineller Hobel, mit einem durch einen in einem Gehäuse (12) angeordneten Antriebsmotor (13) antreibbaren Werkzeug (14) zur Bearbeitung eines Werkstücks (16), mit einem Werkstück-Tisch (50a; 50b), der einen Befestigungsabschnitt (63a; 63b) zur Befestigung an dem Gehäuse (12) und eine Führungsfläche (51) zum Anlegen an das Werkstück (16) aufweist, und mit einer Befestigungseinrichtung (20) zur Befestigung des Werkstück-Tischs (50a; 50b) an dem Gehäuse (12), wobei die Befestigungseinrichtung (20) mindestens einen relativ zu einem Widerlager (27) beweglich gelagerten Haltebacken (25) aufweist, der zwischen einer zum Halten des Werkstück-Tischs (50a; 50b) an dem Gehäuse (12) vorgesehenen, zu dem Widerlager (27) hin bewegten Haltestellung (H) und einer zum Entfernen des Werkstück-Tischs (50a; 50b) von dem Gehäuse (12) vorgesehenen, von dem Widerlager (27) entfernten Freigabestellung (F) beweglich ist, **dadurch gekennzeichnet, dass** die Befestigungseinrichtung (20) eine Spanneinrichtung (35) zum Spannen mindestens einer am dem Befestigungsabschnitt (63a; 63b) angeordneten Anlagefläche (64a, 65, 66; 64b) des Werkstück-Tischs (50a; 50b) gegen mindestens eine an dem Gehäuse (12) angeordnete Stützfläche (22) umfasst oder bildet, und dass die Spanneinrichtung (35) mindesten eine beim Bewegen des mindestens einen Haltebackens (25) zwischen der Freigabestellung (F) und der Haltestellung (H) in der Art eines Keilgetriebes wirksame Schrägfläche (32, 72, 73) zum Spannen der mindestens einen Anlagefläche (64a, 65, 66; 64b) gegen die mindestens eine Stützfläche (22) umfasst.

2. Hand-Werkzeugmaschine nach Anspruch 1, **dadurch gekennzeichnet, dass** der mindestens eine Haltebacken (25) an einem Lager (26) schwenkbeweglich und/oder schiebebeweglich gelagert ist.

3. Hand-Werkzeugmaschine nach Anspruch 1 oder 2, **dadurch gekennzeichnet, dass** das Widerlager (27) und der mindestens eine Haltebacken (25) an dem Gehäuse (12) angeordnet sind.

4. Hand-Werkzeugmaschine nach einem der vorhergehenden Ansprüche, **dadurch gekennzeichnet, dass** das Widerlager (27) bezüglich des Gehäuses (12) oder des Werkstück-Tischs (50a; 50b) ortsfest feststehend ist oder dass das Widerlager (27) einen relativ zu dem mindestens einen Haltebacken (25) beweglich gelagerten Widerlagerkörper, insbesondere einen Widerlager-Haltebacken (25), aufweist.

5. Hand-Werkzeugmaschine nach einem der vorhergehenden Ansprüche, **dadurch gekennzeichnet, dass** das Widerlager (27) und/oder der mindestens eine Haltebacken (25) hakenförmig oder klauenförmig sind.

6. Hand-Werkzeugmaschine nach einem der vorhergehenden Ansprüche, **dadurch gekennzeichnet, dass** der mindestens eine Haltebacken (25) bei einer Bewegung von der Freigabestellung (F) in die Haltestellung (H) eine relative Verlagerung des Werkstück-Tischs (50a; 50b) in Richtung des bezüglich des Gehäuses (12) ortfesten Widerlagers (27) im Sinne eines Verspannens des Werkstück-Tischs (50a; 50b) an dem Gehäuse (12) bewirkt.

7. Hand-Werkzeugmaschine nach einem der vorhergehenden Ansprüche, **dadurch gekennzeichnet, dass** das Widerlager (27) und/oder der mindestens eine Haltebacken (25) eine Schrägfläche (32, 72, 73) zum Spannen der mindestens einen Anlagefläche (64a, 65, 66; 64b) des Werkstück-Tischs (50a; 50b) gegen die mindestens eine an dem Gehäuse (12) angeordnete Stützfläche (22) aufweisen und/oder dass mindestens eine Schrägfläche (32, 72, 73) an dem Befestigungsabschnitt (63a; 63b) des Werkstück-Tischs (50a; 50b) vorhanden ist.

8. Hand-Werkzeugmaschine nach einem der vorhergehenden Ansprüche, **dadurch gekennzeichnet, dass** die mindestens eine Anlagefläche (64a, 65, 66; 64b) und/oder die mindestens eine Stützfläche (22) im Wesentlichen parallel zu der Führungsfläche (51) verlaufen.

9. Hand-Werkzeugmaschine nach einem der vorhergehenden Ansprüche, **dadurch gekennzeichnet, dass** der Befestigungsabschnitt (63a; 63b) und die Befestigungseinrichtung (20), insbesondere der mindestens eine Haltebacken (25), zusammenwirkende Winkelanschlagflächen zur Festlegung einer Winkelposition des Werkstück-Tischs (50a; 50b) gegenüber dem Gehäuse (12) aufweisen.

10. Hand-Werkzeugmaschine nach einem der vorhergehenden Ansprüche, **dadurch gekennzeichnet, dass** sie ein Hand-Bedien-element (40) zum manuellen Betätigen des mindestens einen Haltebackens (25) aufweist, wobei das Hand-Bedienelement (40) zweckmäßigerweise einen Betätigungshebel (40a) umfasst.

11. Hand-Werkzeugmaschine nach einem der vorhergehenden Ansprüche, **dadurch gekennzeichnet, dass** sie ein Betätigungsgetriebe (41) zum Betätigen des mindestens einen Haltebackens (25) aufweist.

12. Hand-Werkzeugmaschine nach Anspruch 11, **dadurch gekennzeichnet, dass** das Betätigungsgetriebe (41) eine Steuerkurve (44) umfasst, die auf eine mit dem mindestens einen Haltebacken (25) gekoppelte oder an dem mindestens einen Haltebacken (25) angeordnete Betätigungsfläche (45, 48) wirkt.

13. Hand-Werkzeugmaschine nach Anspruch 12, **dadurch gekennzeichnet, dass** sie Federmittel zum federnden Halten eines Kontakts zwischen der Steuerkurve (44) und der Betätigungsfläche (45, 48) aufweist und/oder dass die Steuerkurve (44) oder die Betätigungsfläche (45, 48) einen zwischen der Freigabestellung (F) und der Haltestellung (H) wirksamen Totpunkt (92) zum Halten der Befestigungseinrichtung (20) in der Freigabestellung (F) oder der Haltestellung (H) aufweist und/oder die Steuerkurve (44) um eine Schwenkachse (43) des Betätigungshebels (40a) verläuft.

14. Hand-Werkzeugmaschine nach einem der vorhergehenden Ansprüche, **dadurch gekennzeichnet, dass** sie Rastmittel zum Verrasten des mindestens einen Haltebackens (25) in der Haltestellung (H) aufweist.

15. Hand-Werkzeugmaschine nach einem der vorhergehenden Ansprüche, **dadurch gekennzeichnet, dass** sie eine Stichsäge oder eine Kreissäge ist und das Werkzeug (14) ein Säge-Werkzeug (15) ist.

## Claims

1. Hand-operated power tool, in particular motorised hand saw (11) or motorised plane, comprising a tool (14), which can be driven by a drive motor (13) located in a housing (12) for machining a workpiece (16), further comprising a work table (50a; 50b) having an attachment section (63a; 63b) for attaching to the housing (12) and a guide surface (51) for placing against the workpiece (16), and further comprising an attachment device (20) for attaching the work table (50a; 50b) to the housing (12), wherein the attachment device (20) comprises at least one holding jaw (25), which is movably mounted relative to an abutment (27) and movable between a holding position (H) provided for holding the work table (50a; 50b) at the housing (12) when moved towards the abutment (27) and a release position (F) provided for removing the work table (50a; 50b) from the housing (12) when moved away from the abutment (27), **characterised in that** the attachment device (20) comprises or forms a clamping device (35) for clamping at least one locating surface (64a, 65, 66; 64b) of the work table (50a; 50b), which is located on the attachment section (63a; 63b), against at least one supporting surface (22) located on the housing (12), and **in that** the clamping device (35) comprises at least one sloping surface (32, 72, 73) acting in the manner of a wedge mechanism when the at least one holding jaw (25) is moved between the release position (F) and the holding position (H) in order to clamp the at least one locating surface (64a, 65, 66; 64b) against the at least one supporting surface (22).

2. Hand-operated power tool according to claim 1, **characterised in that** the at least one holding jaw (25) is pivotably and/or slidably mounted on a bearing (26).

3. Hand-operated power tool according to claim 1 or 2, **characterised in that** the abutment (27) and the at least one holding jaw (25) are located on the housing (12).

4. Hand-operated power tool according to any of the preceding claims, **characterised in that** the abutment (27) is stationary relative to the housing (12) or the work table (50a; 50b), or **in that** the abutment (27) has an abutment body, in particular an abutment holding jaw (25), which is movable relative to the at least one holding jaw (25).

5. Hand-operated power tool according to any of the preceding claims, **characterised in that** the abutment (27) and/or the at least one holding jaw (25) is/are hook- or claw-shaped.

6. Hand-operated power tool according to any of the preceding claims, **characterised in that** the at least one holding jaw (25) causes, at a movement from the release position (F) into the holding position (H), a relative displacement of the work table (50a; 50b) towards the abutment (27), which is stationary relative to the housing (12), for the purpose of clamping the work table (50a; 50b) to the housing (12).

7. Hand-operated power tool according to any of the preceding claims, **characterised in that** the abutment (27) and/or the at least one holding jaw (25) has/have a sloping surface (32, 72, 73) for clamping the at least one locating surface (64a, 65, 66; 64b) of the work table (50a; 50b) against the at least one supporting surface (22) located on the housing (12), and/or **in that** at least one sloping surface (32, 72, 73) is provided on the attachment section (63a; 63b) of the work table (50a; 50b).

8. Hand-operated power tool according to any of the preceding claims, **characterised in that** the at least one locating surface (64a, 65, 66; 64b) and/or the at least one supporting surface (22) extend(s) substantially parallel to the guide surface (51).

9. Hand-operated power tool according to any of the preceding claims, **characterised in that** the attachment section (63a; 63b) and the attachment device (20), in particular the at least one holding jaw (25), have cooperating angular stop faces for defining an angular position of the work table (50a; 50b) relative to the housing (12).

10. Hand-operated power tool according to any of the preceding claims, **characterised in that** it has a hand control (40) for the manual actuation of the at least one holding jaw (25), the hand control (40) expediently comprising an operating lever (40a).

11. Hand-operated power tool according to any of the preceding claims, **characterised in that** it has an actuating mechanism (41) for the actuation of the at least one holding jaw (25).

12. Hand-operated power tool according to any of the preceding claims, **characterised in that** the actuating mechanism (41) comprises a control cam (44), which acts on an actuating surface (45, 48) coupled to or located on the at least one holding jaw (25).

13. Hand-operated power tool according to claim 12, **characterised in that** it has spring means for resiliently holding a contact between the control cam (44) and the actuating surface (45, 48), and/or **in that** the control cam (44) or the actuating surface (45, 48) has a dead centre acting between the release position (F) and the holding position (H) for holding the attachment device (20) in the release position (F) or the holding position (H), and/or **in that** the control cam (44) extends about a pivot axis (43) of the operating lever (40a).

14. Hand-operated power tool according to any of the preceding claims, **characterised in that** it has latching means for latching the at least one holding jaw (25) in the holding position (H).

15. Hand-operated power tool according to any of the preceding claims, **characterised in that** it is a compass saw or a circular saw and the tool (14) is a sawing tool (15).

## Revendications

1. Machine-outil manuelle, en particulier scie manuelle (11) mécanique ou rabot mécanique, comprenant un outil (14) pouvant être entraîné par un moteur d'entraînement (13) disposé dans un boîtier (12), servant à usiner une pièce (16), comprenant un plateau de pièce (50a ; 50b), qui présente une section de fixation (63a ; 63b) destinée à être fixée au niveau du boîtier (12) et une surface de guidage (51) destinée à être posée au niveau de la pièce (16), et comprenant un dispositif de fixation (20) servant à fixer le plateau de pièce (50a ; 50b) au niveau du boîtier (12), dans laquelle le dispositif de fixation (20) présente au moins une mâchoire de maintien (25) montée de manière mobile par rapport à une butée (27), laquelle est mobile entre une position de maintien (H) prévue pour maintenir le plateau de pièce (50a ; 50b) au niveau du boîtier (12), déplacée en direction de la butée (27) et une position de desserrage (F) prévue pour retirer le plateau de pièce (50a ; 50b) du boîtier (12), éloignée de la butée (27), **caractérisée en ce que** le dispositif de fixation (20) comprend ou forme un dispositif de serrage (35) servant à serrer au moins une surface d'appui (64a, 65, 66 ; 64b), disposée au niveau de la section de fixation (63a ; 63b), du plateau de pièce (50a ; 50b) contre au moins une surface de support (22) disposée au niveau du boîtier (12), et que le dispositif de serrage (35) comprend au moins une surface inclinée (32, 72, 73) active à la manière d'un engrenage cunéiforme lors du déplacement de l'au moins une mâchoire de maintien (25) entre la position de desserrage (F) et la position de maintien (H), servant à serrer l'au moins une surface d'appui (64a, 65, 66 ; 64b) contre l'au moins une surface de support (22).

2. Machine-outil manuelle selon la revendication 1, **caractérisée en ce que** l'au moins une mâchoire de maintien (25) est montée de manière mobile par pivotement et/ou de manière mobile par glissement au niveau d'un palier (26).

3. Machine-outil manuelle selon la revendication 1 ou 2, **caractérisée en ce que** la butée (27) et l'au moins une mâchoire de maintien (25) sont disposées au niveau du boîtier (12).

4. Machine-outil manuelle selon l'une quelconque des revendications précédentes, **caractérisée en ce que** la butée (27) est immobile de manière stationnaire par rapport au boîtier (12) ou au plateau de pièce (50a ; 50b), ou que la butée (27) présente un corps de butée monté de manière mobile par rapport à l'au moins une mâchoire de maintien (25), en particulier une mâchoire de maintien de butée (25).

5. Machine-outil manuelle selon l'une quelconque des revendications précédentes, **caractérisée en ce que** la butée (27) et/ou l'au moins une mâchoire de maintien (25) présentent une forme de crochet ou de griffe.

6. Machine-outil manuelle selon l'une quelconque des revendications précédentes, **caractérisée en ce que** l'au moins une mâchoire de maintien (25) entraîne, lors d'un déplacement depuis la position de desserrage (F) dans la position de maintien (H), un déplacement relatif du plateau de pièce (50a ; 50b) en direction de la butée (27) stationnaire par rapport au boîtier (12) au sens d'un assemblage par serrage du plateau de pièce (50a ; 50b) au niveau du boîtier (12).

7. Machine-outil manuelle selon l'une quelconque des revendications précédentes, **caractérisée en ce que** la butée (27) et/ou l'au moins une mâchoire de maintien (25) présentent une surface inclinée (32, 72, 73) servant à serrer l'au moins une surface d'appui (64a, 65, 66 ; 64b) du plateau de pièce (50a ; 50b) contre l'au moins une surface de support (22) disposée au niveau du boîtier (12), et/ou qu'au moins une surface inclinée (32, 72, 73) est présente au niveau de la section de fixation (63a ; 63b) du plateau de pièce (50a ; 50b).

8. Machine-outil manuelle selon l'une quelconque des revendications précédentes, **caractérisée en ce que** l'au moins une surface d'appui (64a, 65, 66 ; 64b) et/ou l'au moins une surface de support (22) s'étendent sensiblement de manière parallèle par rapport à la surface de guidage (51).

9. Machine-outil manuelle selon l'une quelconque des revendications précédentes, **caractérisée en ce que** la section de fixation (63a ; 63b) et le dispositif de fixation (20), en particulier l'au moins une mâchoire de maintien (25), présentent des surfaces d'arrêt angulaires de coopération servant à bloquer une position angulaire du plateau de pièce (50a ; 50b) par rapport au boîtier (12).

10. Machine-outil manuelle selon l'une quelconque des revendications précédentes, **caractérisée en ce qu'**elle présente un élément d'utilisation manuel (40) servant à actionner manuellement l'au moins une mâchoire de maintien (25), dans laquelle l'élément d'utilisation manuel (40) comprend de manière appropriée un levier d'actionnement (40a).

11. Machine-outil manuelle selon l'une quelconque des revendications précédentes, **caractérisée en ce qu'**elle présente un engrenage d'actionnement (41) servant à actionner l'au moins une mâchoire de maintien (25).

12. Machine-outil manuelle selon la revendication 11, **caractérisée en ce que** l'engrenage d'actionnement (41) comprend une came de commande (44), qui agit sur une surface d'actionnement (45, 48) couplée à l'au moins une mâchoire de maintien (25) ou disposée au niveau de l'au moins une mâchoire de maintien (25).

13. Machine-outil manuelle selon la revendication 12, **caractérisée en ce qu'**elle présente des moyens formant ressorts servant à maintenir sur ressorts un contact entre la came de commande (44) et la surface d'actionnement (45, 48), et/ou que la came de commande (44) ou la surface d'actionnement (45, 48) présente un point mort (92) actif entre la position de desserrage (F) et la position de maintien (H), servant à maintenir le dispositif de fixation (20) dans la position de desserrage (F) ou dans la position de maintien (H), et/ou la came de commande (44) s'étend autour d'un axe de pivotement (43) du levier d'actionnement (40a).

14. Machine-outil manuelle selon l'une quelconque des revendications précédentes, **caractérisée en ce qu'**elle présente des moyens d'encliquetage servant à encliqueter l'au moins une mâchoire de maintien (25) dans la position de maintien (H).

15. Machine-outil manuelle selon l'une quelconque des revendications précédentes, **caractérisée en ce qu'**elle est une scie sauteuse ou une scie circulaire, et l'outil (14) est un outil de sciage (15).
